# EUROPÄISCHE PATENTSCHRIFT

(11) **EP 0 718 525 B1**
(45) Veröffentlichungstag und Bekanntmachung des Hinweises auf die Patenterteilung: **24.09.1997**
(21) Anmeldenummer: 96103528.4
(22) Anmeldetag: 29.04.1994
(51) Int. Cl.: F16H 7/12, F16H 7/08

(54) **Betätigungseinrichtung für eine Spannvorrichtung**
Activation device for tensioning mechanism
Dispositif d'actionnement pour mécanisme tendeur

(30) Priorität: 01.10.1993 DE 4333567
(43) Veröffentlichungstag der Anmeldung: 26.06.1996
(62) Teilanmeldung aus: 94106740.7
(73) Patentinhaber: Gustav Wahler GmbH u. Co, D-73730 Esslingen (DE)
(72) Erfinder: Peuker, Thomas, 73732 Esslingen (DE)
(74) Vertreter: Kratzsch, Volkhard, Dipl.-Ing.

(56) Entgegenhaltungen:
- DE-A- 4 207 322
- US-A- 4 874 352

## Beschreibung

Die Erfindung bezieht sich auf eine Betätigungseinrichtung für eine Spannvorrichtung gemäß dem Oberbegriff des Anspruchs 1.

Der Erfindung liegt die Aufgabe zugrunde, eine Betätigungseinrichtung der eingangs genannten Art mit einem besonders einfachen Widerlager zu schaffen.

Diese Aufgabe ist gemäß der Erfindung durch die Merkmale im Anspruch 1 gelöst. Hierdurch ist in besonders einfacher Weise ein Widerlager für die Rückstellfeder verwirklicht. Dieses Widerlager mit mindestens einem quergerichteten Stift ist schnell durch Einstecken in das Gehäuse montierbar, so daß dann die Betätigungseinrichtung funktionsfertig vorliegt. Dabei ist durch den mindestens einen Stift die Verbindung der einzelnen Komponenten der Betätigungseinrichtung gesichert. Die Betätigungseinrichtung kann in dieser Weise als einbaufertiges Element dem Kunden geliefert werden. Wird dann die Betätigungseinrichtung an einem Bauteil befestigt, so ist dadurch der mindestens eine Stift gegen Herausrutschen gegensinnig zur Einsteckrichtung bereits durch das Bauteil gesichert.

Weitere vorteilhafte Ausgestaltungen dazu ergeben sich aus den Ansprüchen 2 bis 9.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen axialen Längsschnitt mit teilweiser Seitenansicht einer Betätigungseinrichtung gemäß einem ersten Ausführungsbeispiel,
- Fig. 2: einen schematischen horizontalen Schnitt in Pfeilrichtung II - II in Fig. 1,
- Fig. 3: einen schematischen Schnitt etwa sprechend demjenigen in Fig. 2 eines zweiten Ausführungsbeispiels.

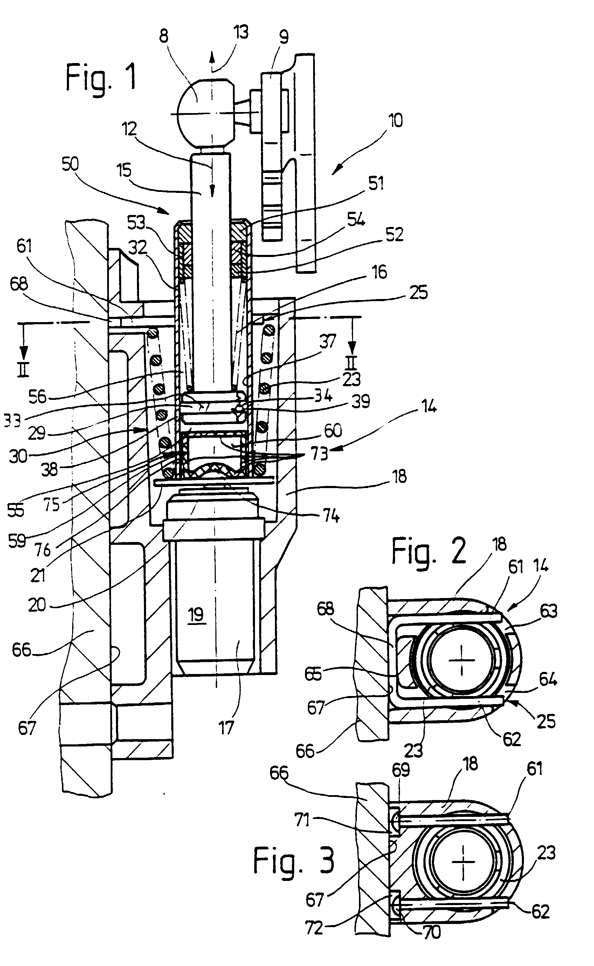

Beim ersten Ausführungsbeispiel in Fig. 1 und 2 ist eine Spannvorrichtung 10 gezeigt, die für Kettentriebe, Riementriebe od. dgl., und insbesondere für Zahnriemen einer Brennkraftmaschine, bestimmt ist. Zur Spannvorrichtung 10 gehört eine nicht weiter gezeigte Spannrolle, die über einen Hebel 9 betätigbar ist, wobei der Hebel 9 über eine Kugelverbindung 8 mit der Spannvorrichtung 10 gelenkig verbunden ist. Die Betätigung des Hebels 9 und der z.B. daran drehbar gelagerten Spannrolle erfolgt in dem Sinn, daß eine axiale Bewegung der Kugelverbindung 8 in Pfeilrichtung 12 zum Andrücken und eine gegensinnige Bewegung in Pfeilrichtung 13 zum Entlasten, z.B. Wegbewegen, der Spannrolle führt. Die nicht gezeigte Spannrolle ist mittels einer Betätigungseinrichtung 14 temperaturabhängig betätigbar. Eine ähnliche Anordnung ergibt sich aus DE-OS 42 07 322, auf die zur Vermeidung von Wiederholungen für identische Teile Bezug genommen ist.

Die Betätigungseinrichtung 14 weist für die Betätigung ein Betätigungsglied 15 auf, das in beschriebener Weise auf die Spannrolle arbeitet. Das Betätigungsglied 15 steht unter der Vorspannung einer z.B. relativ schwachen Feder 16, die insbesondere als Druckfeder ausgebildet ist.

Die Betätigungseinrichtung 14 weist ferner ein zum Betätigungsglied 15 z.B. koaxiales thermostatisches Betätigungselement 17 auf, das z.B. ortsfest in einem Gehäuse 18 gehalten ist. Das Betätigungselement 17 enthält in einem Gehäuse 19 einen Dehnstoff, z.B. Wachs, der bei Temperaturerhöhung sein Volumen vergrößert und dann einen Arbeitskolben 20 in Richtung des Pfeiles 13 ausschiebt, der im Gehäuse 19 enthalten und aus diesem bei Temperaturerhöhung ausschiebbar ist. Der Arbeitskolben 20 wirkt dann formschlüssig auf einen Zylinderboden 21 eines Zylinders 32. Eine Ausschiebbewegung des Arbeitskolbens 20 in Pfeilrichtung 13 relativ zum ortsfest gehaltenen Gehäuse 19 und 18 führt zu einer Axialverschiebung des Zylinders 32 in Pfeilrichtung 13 gegen die Wirkung einer axial wirkenden, zugeordneten Rückstellfeder 23, die z.B. als zylindrische Schraubenfeder ausgebildet ist. Die Rückstellfeder 23 liegt mit ihrem in Fig. 1 unteren Ende an der Außenseite des Zylinderbodens 21 an. Mit ihrem in Fig. 1 oberen Ende ist die Rückstellfeder 23 mittels eines Widerlagers 25 am Gehäuse 18 axial abgestützt. Die Rückstellfeder 23 ist bestrebt, den Zylinder 32 und darüber den Arbeitskolben 20 in Fig. 1 in die Ausgangsstellung gemäß Pfeil 12 zurückzustellen. Dies hat im Bereich der nicht gezeigten Spannrolle zur Folge, daß dann die Spannrolle in Richtung an den nicht gezeigten Kettenantrieb, Riementrieb, Zahnriemen od. dgl. angedrückt wird. Eine dazu gegensinnige Ausschubbewegung des Arbeitskolbens 20 entgegen der Rückstellfeder 23 und in Richtung des Pfeiles 13 hat zur Folge, daß vom Arbeitskolben 20 über den Zylinderboden 21 der Zylinder 32 in Pfeilrichtung 13 axial verschoben wird, gegensinnig zur Rückstellfeder 23. Dadurch wird der Hebel 9 in Pfeilrichtung 13 vorgeschoben, wodurch über nicht gezeigte geeignete Gelenkübertragungen die Abstützrolle entlastet wird und im Sinne einer Reduzierung der Kettenkraft, Riemenkraft oder Zahnriemenkraft oder dergleichen wirksam ist.

Bei Abkühlung der Temperatur des Dehnstoffes im Gehäuse 19 reduziert dieser sein Volumen, so daß über die Rückstellfeder 23 und den Zylinder 32 der Arbeitskolben 20 und das Betätigungsglied 15 in Richtung des Pfeiles 12 zurück verstellt werden, was auf seiten der nicht gezeigten Spannrolle zu einem Andrücken dieser an den Kettentrieb, Riementrieb, Zahnriemen od. dgl. führt.

Das Betätigungsglied 15 ist koaxial zum Zylinder 32 angeordnet und relativ dazu axial verschiebbar, und zwar gegen die Wirkung der Feder 16, die im Verhältnis zur Rückstellfeder 23 wesentlich schwächer und wie diese als Druckfeder ausgebildet ist. Die Feder 16 ist mit einem Ende am Zylinder 32 und mit ihrem anderen Ende an einem Kolben 29 abgestützt, der Bestandteil einer Schwingungsdämpfungseinrichtung 30 ist. Der Kolben 29 ist mit dem Betätigungsglied 15, das als Kolbenstange fungiert, fest und dicht verbunden. Über die Feder 16 ist somit das Betätigungsglied 15 vom Zylinder 32 federnd abgekoppelt. Bei nicht aktiviertem Betätigungselement 17 wird somit über die sich entspannende Feder 16 das Betätigungsglied 15 mitsamt dem Kolben 29 in Pfeilrichtung 12 und so beaufschlagt, daß der Hebel 9 die nicht weiter gezeigte Spannrolle im Sinne einer Riemenspannung andrückt. In gleicher Richtung und Weise wirkt auch die Rückstellfeder 23.

Ist der mittels der Spannrolle gespannte Riemen z.B. ein Zahnriemen einer Brennkraftmaschine, so führt im Betrieb eine Temperaturerhöhung der Brennkraftmaschine dazu, daß sich diese ausdehnt, was eine Erhöhung des Abstandes zwischen der Achse der Kurbelwelle einerseits und der Achse der Nockenwelle andererseits zur Folge hat, was hinsichtlich eines über eine Scheibe an der Kurbelwelle und an der Nockenwelle geführten Zahnriemens bedingt, daß dessen Riemenspannung dadurch zunimmt. Dies muß im Betrieb durch Reduzierung der Anpreßkraft der Spannrolle ausgeglichen werden. Dies geschieht dadurch, daß aufgrund der erhöhten Temperatur der Arbeitskolben 20 des Betätigungselements 17 gegen die Wirkung der Rückstellfeder 23 ausgefahren wird. Dadurch wird der Zylinder 32 in Pfeilrichtung 13 vorgeschoben und mit diesem auch das Betätigungsglied 15, wodurch die Spannrolle vom Zahnriemen wegbewegt wird. Beim Erkalten der Brennkraftmaschine erfolgt eine gegensinnige Bewegung durch Rückstellung über die Rückstellfeder 23. Die Feder 16 bewirkt bei nicht aktiviertem Betätigungselement und Zylinder 32 eine federelastische Anpassung des Betätigungsgliedes 15 und damit des Hebels 9 und der Spannrolle an sonstige Änderungen der Riemenspannung, z.B. solche, die sich durch zunehmende Lebensdauer des Zahnriemens und sich dadurch einstellende Verlängerungen des letzteren ergeben. Der aufgrund der Feder 16 eingeführte Nachteil liegt darin, daß das System, bestehend aus Betätigungsglied 15 und Feder 16, im Betrieb der Spannvorrichtung 10 zu Schwingungen neigt, vor allem im kalten Zustand.

Derartige Schwingungen werden durch die Schwingungsdämpfungseinrichtung 30 ausgeglichen, die auf das Betätigungsglied 15 arbeitet. Die Schwingungsdämpfungseinrichtung 30 befindet sich wirkungsmäßig zwischen dem Betätigungsglied 15 und dem Betätigungselement 17. Sie weist einen Flüssigkeitsdämpfer, insbesondere einen Hydraulikdämpfer, auf, der durch den Kolben 29 im Zylinder 32 gebildet ist. Im Zylinder 32 ist beidseitig des Kolbens 29 jeweils ein nach außen abgeschlossener Zylinderraum 55 und 56 gebildet. Beide Zylinderräume 55 und 56 enthalten eine Flüssigkeit, insbesondere Hydraulikflüssigkeit, wobei beide Zylinderräume 55, 56 möglichst vollständig mit der Flüssigkeit gefüllt sind. Der in Fig. 1 obere Zylinderraum 56, der vom Betätigungsglied 15 durchsetzt ist, ist mittels Dichtungsmitteln 50 abgedichtet. Die Dichtungsmittel 50 bestehen aus einem endseitigen Dichtungsring 51, der vom dortigen Ende des dort umgebördelten Zylinders 32 axial übergriffen ist und innen vom Betätigungsglied 15 durchsetzt ist. Ferner bestehen die Dichtungsmittel 50 aus einem in axialem Abstand davon angeordneten weiteren Dichtungsring 52, der innerhalb einer Hülse 53 enthalten ist, die axial am Dichtungsring 51 abgestützt ist und eine Abstützung für das obere axiale Ende der Feder 16 bildet. Die Hülse 53 enthält eine innere Buchse 54, die so, wie auch der Dichtungsring 52, vom Betätigungsglied 15 durchsetzt ist. Auf diese Weise ist eine zuverlässige Abdichtung an diesem Ende des Zylinders 32 erreicht, und zwar eine Abdichtung des Betätigungsgliedes 15 nach innen und nach außen. Die beschriebenen Dichtungsmittel 50 dienen zugleich als Führungsmittel für das Betätigungsglied 15.

Zwischen dem Zylinder 32 und dem Kolben 29 ist eine Drossel 39 gebildet, die durch einen Ringspalt zwischen der inneren Umfangsfläche 37 des Zylinders 32 und der äußeren Umfangsfläche 38 des Kolbens 29 geschaffen ist. Der Ringspalt 39 verbindet somit beide Zylinderräume 55 und 56. Er kann z.B. etwa 1/10 mm oder auch kleiner oder größer bemessen sein. Aufgrund des Ringspaltes 39 ist eine Dämpfung bei der Bewegung des Kolbens 29 im Zylinder 32 und somit eine Dämpfung einer etwaigen Schwingung des Betätigungsgliedes 15 erreichbar. Zusätzlich zu der vorstehend beschriebenen Drossel oder statt dieser kann der Kolben 29 zumindest einen Ring, z.B. Kolbenring, aufweisen, der innen am Zylinder 32 anliegt und, wie in Fig. 1 schematisch angedeutet ist, als geteilter Ring mit einem Zwischenraum 33 im Teilungsbereich ausgebildet ist, wobei dieser Zwischenraum 33 Verbindung zu beiden Zylinderräumen 55 und 56 hat und somit eine Drossel bilden kann.

In Fig. 1 ist ferner im Bereich des Kolbens 29 schematisch angedeutet, daß der Kolben 29 ein z.B. federbelastetes Rückschlagventil 34 enthalten kann, über das die beiden Zylinderräume 55 und 56 auf beiden Axialseiten des Kolbens 29 miteinander verbunden sind. Das Rückschlagventil 34 ist dabei so gestaltet und angeordnet, daß es gegen die Wirkung seiner Rückstellfeder in einer Richtung gemäß Pfeil 12 oder Pfeil 13 öffnet. Beim gezeigten Ausführungsbeispiel ist die Anordnung so getroffen, daß das Rückschlagventil 34 bei der Bewegung des Betätigungsgliedes 15 mit Kolben 29 gegen die Wirkung der Feder in Richtung des Pfeiles 12, also der Einschubrichtung des Kolbens 29 in den Zylinder 32, öffnet, hingegen bei dazu gegensinniger Bewegung in Pfeilrichtung 13 schließt.

Bei der Axialverschiebung des Betätigungsgliedes 15 mit Kolben 29 ergeben sich in beiden Zylinderräumen 55 und 56 aufgrund der Dimensionen unterschiedliche Volumina.Dadurch kann bei der axialen Verschiebung des Kolbens 29 im Zylinder 32 ein Unterdruck entstehen und Luft hinein gelangen. Ferner ist die Betätigungseinrichtung 14 unterschiedlichen Temperaturen und Temperaturschwankungen ausgesetzt, wobei von einem Temperaturbereich zwischen -30°C und +110°C auszugehen ist. In diesem Temperaturbereich ergibt sich eine Volumenänderung der in den Zylinderräumen 55 und 56 enthaltenen Flüssigkeit. Auch diese gilt es auszugleichen. Zu diesem Zweck ist im einen Zylinderraum 55 auf einer Axialseite des Kolbens 29 im Zylinder 32 ein Ausgleichskörper 59 angeordnet, der auf der Seite des Kolbens 29 vorgesehen ist, die dem Betätigungsglied 15 abgewandt ist. Der Ausgleichskörper 59 ist axial am Stirnende des Zylinderraumes 55, insbesondere am dortigen Zylinderboden 21, abgestützt, der dem dortigen Abschluß des Zylinderraumes 55 dient. Der Ausgleichskörper 59 liegt somit innen am Zylinderboden 21 an. Er ist elastisch verformbar ausgebildet. Ferner enthält der Ausgleichskörper 59 mindestens einen inneren Hohlraum 60. Der Ausgleichskörper 59 kann als Balg, Kissen od. dgl. gestaltet sein.Mindestens eine der seitlichen oder oberseitigen oder unterseitigen Wandungen 73, z.B. die unterseitige Wandung 73, ist zum Hohlraum 60 hin vorgewölbt, wodurch der Hohlraum 60 reduziert und eine zusätzliche Verformungsmöglichkeit bei Kompression gegeben ist. Ferner ist der Ausgleichskörper 59 in vorteilhafter Weise im Hohlraum 60 mit einem Gas, insbesondere Luft od. dgl., gefüllt, wobei dieses Gas mit Vorteil unter einem Druck in der Größenordnung von etwa 1 bar steht. Der Ausgleichskörper 59 besteht aus Gummi, Kunstgummi od. dgl. oder statt dessen aus Kunststoff, einem Elastomer od. dgl. Wird das Betätigungsglied 15 in Pfeilrichtung 12 bewegt, so kann der Ausgleichskörper 59, der kompressibel ist, eine darauf in Pfeilrichtung 12 einwirkende Kraft durch Kompression dämpfen. Wird das Betätigungsglied 15 gegensinnig in Pfeilrichtung 13 bewegt, so kann der Ausgleichskörper 59 sich in Grenzen ausdehnen. Ein etwaiges Vakuum im Zylinder 32 wird auf diese Weise mittels des Ausgleichskörpers 59 ausgeglichen und somit vermieden. Auch ist der Ausgleichskörper 59 in der Lage, eine Volumenzunahme der im Zylinder 32 befindlichen Hydraulikflüssigkeit, z.B. aufgrund einer Temperaturerhöhung, ebenfalls auszugleichen, so daß sich darüber keine Veränderungen in der justierten Stellung des Betätigungsgliedes 15 ergeben. Die mit dem Ausgleichskörper 59 ausgestattete Schwingungsdämpfungseinrichtung 30 ist somit in der Lage, sich selbsttätig bei Temperaturänderungen der Hydraulikflüssigkeit im Zylinder 32 nachzustellen.

Der Zylinder 32 weist ein in Fig. 1 nur schwach schematisch angedeutetes Distanzglied 75 auf, das sich im Bereich des Zylinders 32 unterhalb des Kolbens 29 befindet. Mittels des Distanzgliedes 75 ist der Einschubweg des Kolbens 29 in den Zylinder 32 hinein, d.h. in Pfeilrichtung 12, und somit die Beaufschlagung des Ausgleichskörpers 59 durch den Kolben 29 begrenzbar. Das Distanzglied 75 besteht z.B. aus einer Hülse 76 innerhalb des Zylinders 32, wobei diese Hülse 76 den Ausgleichskörper 59 umgibt und am Zylinderboden 21 axial abgestützt ist. Die Hülse 76 befindet sich also in dem radialen Zwischenraum zwischen dem Ausgleichskörper 59 und dem Zylinder 32. Das obere Ende der Hülse 76 endet in Abstand unterhalb der oberseitigen Wandung 73 des Ausgleichskörpers 59. Dieser Abstand bestimmt, wie weit der Kolben 29 in Pfeilrichtung 12 einschiebbar ist und somit der Ausgleichskörper 59 durch den Kolben 29 bzw. das Volumen im Zylinderraum 55 beaufschlagbar ist.

Die Betätigungseinrichtung 14 weist unabhängig davon, ob sie nun in beschriebener Weise gemäß Fig. 1 mit der Schwingungsdämpfungseinrichtung 30 ausgestattet ist oder nicht, eine weitere Besonderheit hinsichtlich der Gestaltung des Widerlagers 25 auf, das das in Fig. 1 obere Ende der Rückstellfeder 23 am Gehäuse 18 der Betätigungseinrichtung 14 axial abstützt. Dieses Widerlager 25 weist mindestens einen Stift - beim ersten und zweiten Ausführungsbeispiel gemäß Fig. 1, 2 bzw. 3 zwei Stifte 61 und 62 - auf, wobei der jeweilige Stift 61, 62 quer zur Längsmittelachse der Rückstellfeder 23 gerichtet ist und in zugeordneten Öffnungen 63, 64, z.B. Bohrungen, sowie einer schlitzartigen rückseitigen Ausnehmung 65 des Gehäuses 18 aufgenommen ist. Der jeweilige Stift 61, 62 ist in Richtung der Längsachse in die Öffnung 63 bzw. 64 des Gehäuses 18 eingesteckt, wobei der Stift 61, 62 das obere Ende der Rückstellfeder 23 übergreift und einen Anschlag dafür bildet. Der Stift 61, 62 ist in der Öffnung 63 bzw. 64 und Ausnehmung 65 gegen die Wirkung der endseitig darauf drückenden Rückstellfeder 23 abgestützt. Auf diese Weise kann die Betätigungseinrichtung 14 als fertige Funktionseinheit montiert und ausgeliefert und als solche dann an einem Bauteil 66, z.B. Motorgehäuse, mit planer Fläche 67 angebracht werden.

Der mindestens eine Stift 61, 62 ist formschlüssig und/oder kraftschlüssig gegen Herausrutschen gesichert. Beim Ausführungsbeispiel in Fig. 1 und 2 weist der jeweilige Stift 61, 62 einen quer dazu gerichteten Abschnitt 68 auf, der in der Ausnehmung 65 im Gehäuse 18 lagert.

Bei dem in Fig. 3 gezeigten zweiten Ausführungsbeispiel weist der jeweilige Stift 61, 62 am einen Ende eine Verdickung dickung 69 bzw. 70 auf, z.B. einen Kopf, wobei jede 69, 70 in einer Ausnehmung 71 bzw. 72, z.B. einer eingesenkten Tasche, des Gehäuses 18 lagert.

Ist die Betätigungseinrichtung 14 entsprechend Fig. 1 und 2 so am Bauteil 66, insbesondere dessen Fläche 67, angelegt und befestigt, daß die Fläche 67 auch über den Bereich der Stifte 61, 62, insbesondere des quergerichteten Abschnitts 68, reicht, wie dies in Fig. 1 und 2 gezeigt ist, dann bildet die Fläche 67 eine formschlüssige Sicherung des jeweiligen Stiftes 61, 62 gegen gegensinniges Herausrutschen. Die Stifte 61, 62 werden, ausgehend von Fig. 2, von links her eingesteckt, wobei der quergerichtete Abschnitt 68 in der Ausnehmung 65 aufgenommen wird und von der Fläche 67 rückseitig abgestützt wird und dadurch eine Verschiebung in Fig. 2 nach links hin verhindert ist.

Beim zweiten Ausführungsbeispiel in Fig. 3 werden zur Abstützung der Rückstellfeder 23 die Stifte 61, 62 in der Zeichnung von links nach rechts eingesteckt, wobei die Verdickungen 69, 70 in den Ausnehmungen 71, 72 aufgenommen werden. Überdeckt die Fläche 67 des Bauteils 66 auch diesen Bereich, so übergreift die Fläche 67 die Verdickungen 69, 70, wodurch ein gegensinniges Herausrutschen der Stifte 61, 62 verhindert ist.

Bei einem anderen, nicht gezeigten Ausführungsbeispiel sind die Stifte 61, 62 in irgendeiner anderen Ausrichtung etwa radial zur Längsmittelachse der Rückstellfeder 23 eingebracht. Wenn eine Sicherung gegen Herausrutschen nicht durch das Bauteil 66 und dessen Fläche 67 möglich ist, wie zuvor beschrieben ist, so wird der mindestens eine Stift 61, 62 mittels Kleben und/oder durch Verformung des Stiftmaterials und/oder des Gehäusematerials, z.B. durch Verstemmen, gegen Herausrutschen gesichert.

Bei beiden Ausführungsbeispielen gemäß Fig. 1, 2 einerseits und Fig. 3 andererseits sind die jeweils zwei Stifte 61, 62 vorgesehen, die einander beabstandet sind und zueinander etwa parallel verlaufen.

Beim ersten Ausführungsbeispiel in Fig. 1 und 2 sind beide Stifte 61, 62 über einen Quersteg miteinander zu einem einstückigen, etwa U-förmigen Bügel verbunden, wobei der Quersteg den quergerichteten Abschnitt 68 bildet, der somit vom einen Stift 61 bis zum anderen Stift 62 reicht.

Beim zweiten Ausführungsbeispiel in Fig. 3 sind beide Stifte 61, 62 voneinander unabhängige Einzelteile, wobei jeder Stift 61, 62 eine eigene endseitige Verdickung 69, 70 aufweist, die in gleicher Weise wie der Abschnitt 68 in Fig. 1 und 2 eine Sicherung gegen Verschieben der Stifte in Fig. 2 und 3 nach rechts hin bildet.

## Patentansprüche

1. Betätigungseinrichtung für eine Spannvorrichtung (10), insbesondere für Ketten- oder Riementriebe, z.B. für den Zahnriemen einer Brennkraftmaschine, mittels der eine Spannrolle temperaturabhängig betätigbar ist und welche ein in einem Gehäuse (18) unter der Vorspannung einer Feder (16) stehendes, relativ zur Betätigungseinrichtung (14) temperaturunabhängig verschiebbares und auf die Spannrolle arbeitendes Betätigungsglied (15) in einem Zylinder (32) aufweist, an dem außen eine Rückstellfeder (23) mit einem Ende axial abgestützt ist, deren anderes Ende in Axialabstand davon mittels eines Widerlagers (25) am Gehäuse (18) abgestützt ist,
**dadurch gekennzeichnet,**
daß das Widerlager (25) mindestens einen quer zur Längsmittelachse der Rückstellfeder (23) gerichteten Stift (61, 62) aufweist, der in zugeordnete Öffnungen (63, 64, 65 bzw. 71, 72) des Gehäuses (18) eingesteckt und darin gegen die Wirkung der endseitig darauf drückenden Rückstellfeder (23) abgestützt ist.

2. Betätigungseinrichtung nach Anspruch 1,
**dadurch gekennzeichnet,**
daß der mindestens eine Stift (61, 62) formschlüssig und/oder kraftschlüssig gegen Herausrutschen gesichert ist.

3. Betätigungseinrichtung nach Anspruch 1 oder 2,
**dadurch gekennzeichnet,**
daß der mindestens eine Stift (61, 62) an einem Ende eine Verdickung (69, 70), z.B. einen Kopf, oder einen dazu quer gerichteten Abschnitt (68) aufweist, die bzw. der in einer Ausnehmung (65 bzw. 71, 72) des Gehäuses (18) lagert.

4. Betätigungseinrichtung nach einem der Ansprüche 1 bis 3,
**gekennzeichnet durch**
die Anlage an einer Fläche (67) eines Bauteils (66), z.B. eines Motorgehäuses, mit derjenigen Seite des Gehäuses (18), von der aus der mindestens eine Stift (61, 62) mit der endseitigen Verdickung (69, 70) bzw. dem dortigen quer gerichteten Abschnitt (68) in das Gehäuse (18) eingebracht ist, wobei die Fläche (67) eine formschlüssige Sicherung des Stiftes (61, 62) gegen gegensinniges Herausrutschen bildet.

5. Betätigungseinrichtung nach einem der Ansprüche 1 bis 4,
**dadurch gekennzeichnet,**
daß der mindestens eine Stift (61, 62) mittels Kleben gegen Herausrutschen gesichert ist.

6. Betätigungseinrichtung nach einem der Ansprüche 1 bis 5,
**dadurch gekennzeichnet,**
daß der mindestens eine Stift (61, 62) durch Verformung des Stiftmaterials und/oder des Materials des Gehäuses (18), z.B. durch Verstemmen, gegen Herausrutschen gesichert ist.

7. Betätigungseinrichtung nach einem der Ansprüche 1 bis 6,
**gekennzeichnet durch**
zwei einander beabstandete und zueinander etwa parallele Stifte (61, 62).

8. Betätigungseinrichtung nach Anspruch 7,
**dadurch gekennzeichnet,**
daß beide Stifte (61, 62) über einen Quersteg (68) miteinander zu einem einstückigen, etwa U-förmigen Bügel verbunden sind, wobei der Quersteg (68) den quergerichteten Abschnitt beider Stifte bildet.

9. Betätigungseinrichtung nach Anspruch 7,
**dadurch gekennzeichnet ,**
daß beide Stifte (61, 62) voneinander unabhängige Einzelteile bilden und vorzugsweise jeweils eine endseitige Verdickung (69, 70) aufweisen.

## Claims

1. Actuation device for a tensioning mechanism (10), in particular for chain or belt drives, for example for the toothed belts of an internal combustion engine, by means of which a tensioning roller can be actuated in a temperature-dependent manner and which comprises in a cylinder (32) an actuating member (15), which is under the pre-tension of a spring (16) in a housing (18), is displaceable relative to the actuating device (14) in a temperature-independent manner and working on the tensioning roller, on the outside of which cylinder a restoring spring (23) is supported axially by one end, whereof the other end, at an axial distance therefrom, is supported by means of an abutment (25) against the housing (18), characterised in that the abutment (25) comprises at least one pin (61, 62) directed transversely to the longitudinal central axis of the restoring spring (23), which pin is inserted in associated openings (63, 64, 65 or 71, 72) of the housing (18) and is supported therein against the action of the restoring spring (23) pressing thereupon on the end side.

2. Actuating device according to Claim 1, characterised in that the at least one pin (61, 62) is prevented from sliding out in a form-locking and/or force-locking manner.

3. Actuating device according to Claim 1 or 2, characterised in that at one end the at least one pin (61, 62) comprises a thickening (69, 70), for example a head, or a section (68) directed at right angles thereto, which is mounted in a recess (65 or 71, 72) of the housing (18).

4. Actuating device according to one of Claims 1 to 3, characterised by the abutment against a surface (67) of a component (66), for example of an engine housing, with that side of the housing (18), from which the at least one pin (61, 62) with the thickening (69, 70) on the end side or the section (68) directed transversely at this point is inserted in the housing (18), the surface (67) forming form-locking means for preventing the pin (61, 62) from sliding out in the opposite direction.

5. Actuating device according to one of Claims 1 to 4, characterised in that the at least one pin (61, 62) is prevented from sliding out by means of sticking.

6. Actuating device according to one of Claims 1 to 5, characterised in that the at least one pin (61, 62) is prevented from sliding out by deformation of the pin material and/or the material of the housing (18), for example by caulking.

7. Actuating device according to one of Claims 1 to 6, characterised by two pins (61, 62) spaced apart from each other and approximately parallel to each other.

8. Actuating device according to Claim 7, characterised in that both pins (61, 62) are connected to each other by way of a transverse web (68) to form a one-piece, approximately U-shaped clip, the transverse web (68) forming the transversely directed section of both pins.

9. Actuating device according to Claim 7, characterised in that both pins (61, 62) form individual parts independent of each other and preferably each comprise a thickening (69, 70) on the end side.

## Revendications

1. Dispositif de commande pour un mécanisme tendeur (10), en particulier pour des transmissions par chaîne ou par courroie, par exemple pour des courroies dentées d'un moteur à combustion interne, lequel dispositif permet d'actionner en fonction de la température une poulie de tension et est muni d'un organe de commande (15), mis en précontrainte dans une cage (18) par un ressort (16), pouvant exécuter un mouvement relatif par rapport au dispositif de commande (14), agissant sur la poulie de tension et monté dans un cylindre (32), contre l'extérieur duquel s'appuie dans le sens axial l'une des extrémités d'un ressort de rappel (23) et dont l'autre extrémité s'appuie à une distance axiale déterminée contre la cage (18) par l'intermédiaire d'une butée (25), caractérisé en ce que la butée (25) est munie d'au moins une broche (61, 62) orientée transversalement par rapport à l'axe médian longitudinal du ressort de rappel (23), laquelle broche est insérée dans des orifices (63, 64, 65 ou 71, 72) correspondants de la cage (18) et dans lesquels ladite broche est supportée pour résister à l'action exercée par une extrémité du ressort de rappel (23).

2. Dispositif de commande selon la revendication 1, caractérisé en ce qu'au moins l'une des broches (61, 62) est insérée par engagement positif ou par adhérence afin d'empêcher son glissement vers l'extérieur.

3. Dispositif de commande selon la revendication 1 ou 2, caractérisé en ce qu'au moins l'une des broches (61, 62) présente à une extrémité une portion épaissie (69, 70), une tête par exemple, ou une portion orientée transversalement à ladite broche, qui sont logées l'une ou l'autre dans un évidement (65 ou 71, 72) de la cage (18).

4. Dispositif de commande selon l'une quelconque des revendications 1 à 3, caractérisé par la mise en contact entre une surface (67) d'une pièce (66), par exemple un carter de moteur, et la face de la cage (18) à partir de laquelle au moins l'une des broches (61, 62) avec son extrémité présentant la portion épaissie (69, 70) ou la portion (68) orientée transversalement est insérée dans la cage (18), la surface (67) formant un système de protection par engagement positif de la broche (61, 62) empêchant le glissement de cette dernière vers l'extérieur.

5. Dispositif de commande selon l'une quelconque des revendications 1 à 4, caractérisé en ce qu'au moins l'une des broches (61, 62) est insérée et collée pour empêcher son glissement vers l'extérieur.

6. Dispositif de commande selon l'une quelconque des revendications 1 à 5, caractérisé en ce qu'au moins l'une des broches (61, 62) est insérée par déformation du matériau de la broche et/ou du matériau de la cage (18), par matage par exemple, pour empêcher son glissement vers l'extérieur.

7. Dispositif de commande selon l'une quelconque des revendications 1 à 6, caractérisé par deux broches (61, 62), écartées l'une de l'autre et pratiquement parallèles l'une à l'autre.

8. Dispositif de commande selon la revendication 7, caractérisé en ce que les deux broches (61, 62) sont reliées entre elles par une barrette transversale (68) pour former d'une seule pièce un étrier pratiquement en forme de U, la barrette transversale (68) formant la portion des deux broches orientée transversalement.

9. Dispositif de commande selon la revendication 7, caractérisé en ce que les deux broches (61, 62) constituent des pièces séparées, indépendantes l'une de l'autre, et présentent chacune, de préférence, une extrémité avec une portion épaissie (69, 70).
